# EUROPÄISCHE PATENTSCHRIFT

(11) **EP 1 219 682 B1**
(45) Veröffentlichungstag und Bekanntmachung des Hinweises auf die Patenterteilung: **05.02.2003**
(21) Anmeldenummer: 00811216.1
(22) Anmeldetag: 21.12.2000
(51) Int. Cl.: C09B 29/03, C09B 29/30, C09B 67/22, C09D 11/00

(54) **Monoazofarbstoffe, deren Herstellung und Verwendung**
Monoazo dyestuffs, their preparation and use
Colorants monoazoiques, leur préparation et leur utilisation

(43) Veröffentlichungstag der Anmeldung: 03.07.2002
(73) Patentinhaber: ILFORD Imaging Switzerland GmbH, 1723 Marly 1 (CH)
(72) Erfinder: Baettig, Kurt, 1724 Praroman - Le Mouret (CH)

(56) Entgegenhaltungen:
- EP-A- 0 345 763
- EP-A- 0 366 121
- EP-A- 0 507 239
- EP-A- 0 602 816
- CH-A- 343 231
- GB-A- 2 131 825
- US-A- 5 542 970

## Beschreibung

### Technisches Gebiet

Die Erfindung bezieht sich auf neue Monoazofarbstoffe und ihre Salze, ein Verfahren zu ihrer Herstellung, ihren Einsatz in Färbe- und Druckverfahren sowie auf Farbstoffpräparationen, die diese Farbstoffe enthalten, insbesondere wässrige Tinten für den Tintenstrahldruck.

### Stand der Technik

Beim Tintenstrahldruck sind im wesentlichen zwei Verfahren zu unterscheiden:
Beim kontinuierlichen Tintenstrahldruck wird unter Druck aus einer Düse ein Tintenstrahl erzeugt, der in einem gewissen Abstand von der Düse in einzelne Tröpfchen zerfällt. Die einzelnen Tröpfchen werden je nachdem, ob eine Bildstelle bedruckt werden soll oder nicht, in einen Auffangbehälter abgelenkt oder auf das Aufnahmematerial aufgebracht. Dies geschieht beispielsweise dadurch, dass auf Grund vorgegebener digitaler Daten nicht benötigte Tröpfchen elektrisch aufgeladen und anschliessend in einem statischen elektrischen Feld in den Auffangbehälter abgelenkt werden. Auch das umgekehrte Verfahren ist möglich, in dem ungeladene Tröpfchen in den Auffangbehälter abgelenkt werden.
Beim nichtkontinuierlichen Verfahren, dem sogenannten "Drop on demand", werden die Tintentropfen nur dann erzeugt, wenn auf Grund der digitalen Daten ein Bildpunkt dargestellt werden muss.

Tintenstrahldrucker der neusten Generation drucken aus wirtschaftlichen Gründen immer schneller. Sie erlauben auch photoähnliche Ausdrucke digitaler Bilder, die mit Digitalkameras aufgenommen wurden oder die durch Digitalisierung von Aufnahmen auf Silberhalogenidaufnahmefilmen mit Hilfe eines Scanners erzeugt wurden, die sich von herkömmlichen Kopien auf Silberhalogenidmaterialien kaum mehr unterscheiden. Auf solche Weise hergestellte Bilder müssen eine sehr gute Haltbarkeit auch unter ungünstigen Bedingungen aufweisen. Das ist nur mit einem fein abgestimmten System von Tinten (respektive den darin enthaltenen Farbstoffen) und einem geeigneten Aufzeichnungsmaterial möglich.
Für solche Drucker und insbesondere photoähnliche Ausdrucke besonders geeignete Aufzeichnungsmaterialien müssen die Tinten sehr rasch aufnehmen können. Die Aufzeichnungsmaterialien enthalten organische Polymere und/oder mikroporöse anorganische Oxide. Bis jetzt können die hergestellten Bilder nicht alle an sie gestellten Anforderungen erfüllen, insbesondere lässt die Diffusionsbeständigkeit bei hoher Feuchte und Wärme der auf diesen Materialien hergestellten Bilder zu wünschen übrig. Auf diesen Materialien mit den heute üblichen gebräuchlichen Tinten, respektive den darin enthaltenen Farbstoffen, hergestellte Bilder werden bei hoher Feuchtigkeit und Wärme unscharf oder geben unkontrollierte Dichteveränderungen oder Farbverschiebungen. Es werden deshalb Farbstoffe gesucht, die die Diffusionsbeständigkeit der auf diesen Materialien hergestellten Bilder bei hoher Feuchtigkeit und Wärme verbessern können.

Obwohl schon eine ganze Anzahl verschiedener Farbstoffe zur Verwendung im Tintenstrahldruck vorgeschlagen worden sind, vermag noch keiner alle an ihn gestellten Anforderungen zu erfüllen.

Der Purpurfarbstoff der Formel (I) (Beispiel Nr. 2) wird im Patent US 5'542'970 beschrieben.

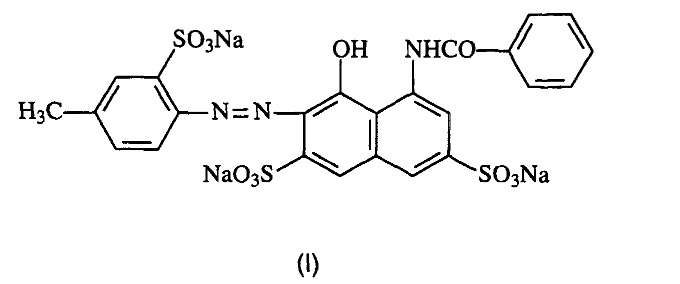

Der Purpurfarbstoff der Formel (II) (Beispiel Nr. 1) wird im Patent US 5'254'160 beschrieben.

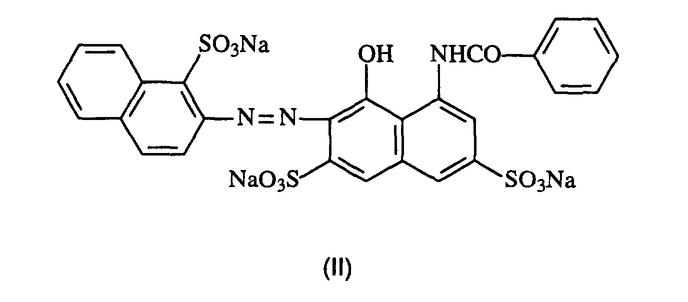

Der Purpurfarbstoff der Formel (III) wird in der Patentanmeldung JP 03-203'970 beschrieben.

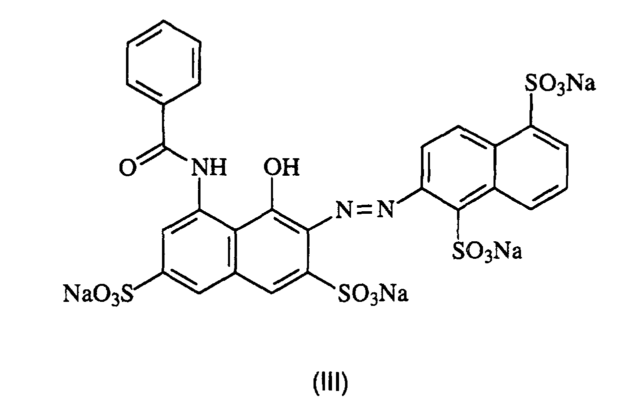

Alle diese Farbstoffe des Standes der Technik vermögen in der Praxis im Tintenstrahldruck nicht alle an sie gestellten Anforderungen zu erfüllen, wenn es darum geht, mit Ihnen Tinten herzustellen, die auf allen möglichen Aufnahmematerialien wie unbeschichtetem oder beschichtetem Papier, beschichtetem oder unbeschichtetem, opakem oder durchsichtigem Kunststoffträger Bilder oder Färbungen mit maximaler Farbwiedergabe zu erzeugen, da diese Farbstoffe bei hoher Temperatur und Feuchtigkeit diffundieren und deshalb unscharfe Bilder resultieren.

Auch in den Dokumenten US-A-5'542'970, EP-A-602'816, EP-A-345'763, GB-A-2'131'825, EP-A-366'121, EP-A-507'239 sowie CH-A-343'231 wird die Verwendung ähnlicher Monoazofarbstoffe beschrieben.

Farbstoffe für solche Tinten müssen eine gute Löslichkeit in der mehrheitlich wässrigen Tintenflüssigkeit aufweisen, sie müssen ins Aufnahmematerial eindringen und dürfen keine Aggregation an der Oberfläche des Aufnahmematerials zeigen ("Bronzing"). Sie müssen Bilder mit einer hohen optischen Dichte, einer guten Wasserfestigkeit, einer guten Lichtechtheit und einer guten Lagerstabilität auch unter ungünstigen Bedingungen ergeben. Sie müssen in der Tinte stabil sein, auch wenn diese lange Zeit unter ungünstigen Bedingungen gelagert wird. Verschiedene Zusammensetzungen für Tinten sind vorgeschlagen worden. Typische Tinten enthalten einen oder mehrere Farbstoffe oder Pigmente, Wasser, organische Hilfslösungsmittel und andere Zusätze.

Die Tinten müssen die folgenden Anforderungen erfüllen:
(1) Die Tinte ergibt Bilder hochstehender Qualität auf allen möglichen Aufnahmematerialien.
(2) Die Tinte ergibt Bilder mit guter Wasserfestigkeit.
(3) Die Tinte ergibt Bilder mit guter Lichtbeständigkeit.
(4) Die Tinte ergibt Bilder mit hervorragender Abriebfestigkeit.
(5) Die Tinte ergibt Bilder mit hervorragender Lagerbeständigkeit bei hoher Temperatur und Feuchtigkeit.
(6) Die Tinte verstopft die Tintenstrahldruckerdüsen nicht, auch wenn diese längere Zeit während Druckpausen nicht abgedeckt sind.
(7) Die Tinte kann lange Zeit gelagert werden, ohne dass ihre Qualität abnimmt.
(8) Die physikalischen Eigenschaften der Tinte, wie Viskosität, Leitfähigkeit und Oberflächenspannung liegen alle innerhalb vorgegebener, für die Anwendung geeigneter Grenzen.
(9) Die Tinte muss ungiftig, unbrennbar und unschädlich sein.

### Beschreibung der Erfindung

Ziel der Erfindung ist die Bereitstellung neuer Monoazofarbstoffe mit rotem oder purpurnem Farbton, die gleichzeitig lichtecht, wasserfest, diffusionsbeständig und gut löslich sind. Sie ergeben Bilder oder Färbungen mit allgemein guten Eigenschaften, insbesondere im Tintenstrahldruck, wo sie Bilder mit maximaler Farbwiedergabe ergeben, die auch bei längerer Lagerung bei hoher Temperatur und Feuchtigkeit nicht oder höchstens in unbedeutendem Ausmass unscharf werden. Ein weiteres Ziel der Erfindung ist die Bereitstellung von flüssigen Farbstoffpräparationen, insbesondere von Tinten für den Tintenstrahldruck, die auf allen möglichen Aufnahmematerialien wie unbeschichtetem oder beschichtetem Papier, beschichtetem oder unbeschichtetem, opakem oder durchsichtigem Kunststoffträger eine spektral unveränderte Farbe ergeben.
Ein weiteres Ziel der Erfindung ist die Bereitstellung von Tinten, die alle vorhin erwähnten Anforderungen erfüllen.

Die vorliegende Erfindung bezieht sich auf neue Monoazofarbstoffe der allgemeinen Formeln (IV) 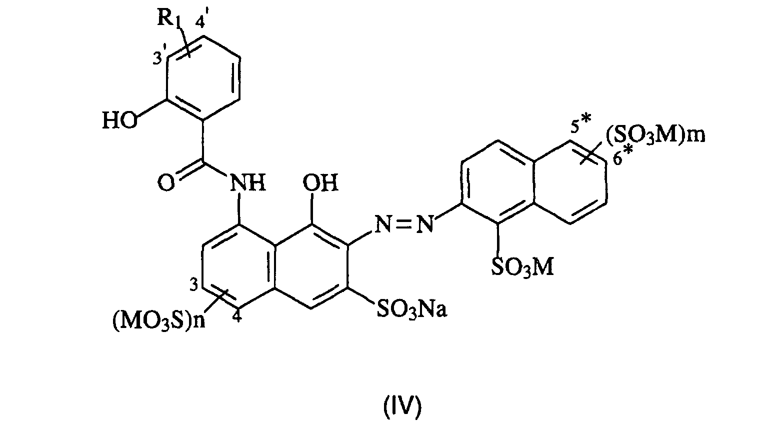 und (V) 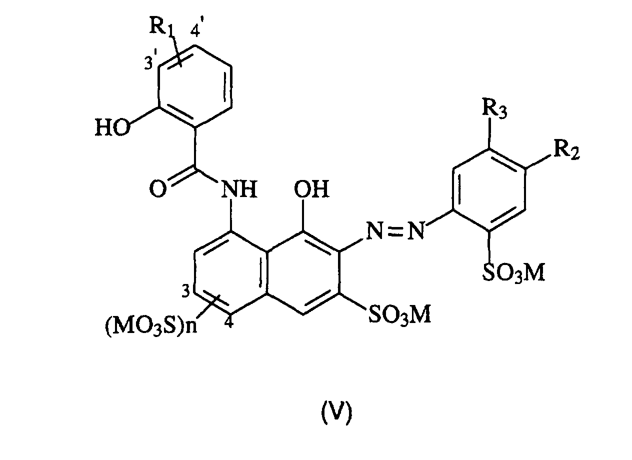 worin
- R₁: für Wasserstoff, Alkyl mit 1 bis 6 Kohlenstoffatomen, Nitro, Fluor, Chlor oder Brom steht;
- R₂, R₃: unabhängig voneinander für Wasserstoff, Alkyl oder Alkoxy mit je 1 bis 6 Kohlenstoffatomen, für substituiertes Amid mit bis zu 6 Kohlenstoffatomen, wobei die Substituenten aus der Gruppe bestehend aus Carboxy, Hydroxy, Carboxymethyl und Carboxyethyl ausgewählt werden; Fluor, Chlor oder Brom stehen;
- m: den Wert 0, 1 oder 2 annimmt;
- n: den Wert 0 oder 1 annimmt;
und
- M: für Wasserstoff, ein Metallkation oder ein Ammoniumkation, das gegebenenfalls einen oder mehrere Alkylreste oder substituierte Alkylreste mit jeweils 1 bis 18 C-Atomen aufweist, steht.

Besonders bevorzugt sind Monoazofarbstoffe, bei denen M und n die gleiche Bedeutung wie in Anspruch 1 haben;
- R₁: für Wasserstoff, Alkyl mit 1 oder 2 Kohlenstoffatomen, Chlor oder Brom steht;
- R₂, R₃: unabhängig voneinander für Wasserstoff, Alkyl oder Alkoxy mit je 1 oder 2 Kohlenstoffatomen, für substituiertes Amid mit bis zu 6 Kohlenstoffatomen, wobei die Substituenten aus der Gruppe bestehend aus Carboxy, Carboxymethyl und Carboxyethyl ausgewählt werden; Chlor oder Brom stehen;
und
- m: den Wert 0 oder 1 annimmt.

Bevorzugt werden als Metallkationen die Kationen der Alkalimetalle (Li, Na, K, Rb, Cs) und der Erdalkalimetalle (Mg, Ca, Sr, Ba).

Die hergestellten Farbstoffe der allgemeinen Formel (IV) sind zusammen mit ihrem Absorptionsmaximum in wässriger Lösung in Tabelle 1 zusammengestellt:

**Tabelle 1**

| Verbindung Nr. | n | Position | m | Position | R₁ | Position | M | λₘₐₓ in H₂O (nm) |
|---|---|---|---|---|---|---|---|---|
| 10 | 1 | 3 | 1 | 5* | H | | Na | 540 |
| 11 | 1 | 3 | 1 | 5* | CH₃ | 3' | Na | 542 |
| 12 | 1 | 3 | 0 | | CH₃ | 3' | Li | 547 |
| 13 | 1 | 3 | 0 | | H | | Li | 545 |
| 14 | 1 | 4 | 0 | | H | | K | 515 |
| 15 | 1 | 4 | 1 | 5* | H | | Na | 510 |
| 16 | 1 | 4 | 1 | 5* | NO₂ | 4' | Na | 525 |
| 17 | 1 | 3 | 2 | 5*, 7* | H | | Na | 538 |

Die hergestellten Farbstoffe der allgemeinen Formel (V) sind zusammen mit ihrem Absorptionsmaximum in wässriger Lösung in Tabelle 2 zusammengestellt:

**Tabelle 2**

| Verbindung Nr. | n | Position | R₁ | Position | R₂ | R₃ | M | λₘₐₓ in H₂O (nm) |
|---|---|---|---|---|---|---|---|---|
| 18 | 1 | 3 | H | | CH₃ | H | Na | 542 |
| 19 | 1 | 3 | H | | H | H | K | 513 |
| 20 | 1 | 3 | CH₃ | 3' | CH₃ | H | Na | 543 |
| 21 | 1 | 3 | H | | OCH₃ | H | Na | 553 |
| 22 | 1 | 3 | H | | H | NHCOCH₃ | Li | 512 |
| 23 | 1 | 3 | H | | H | NHCO(CH₂)₂COOM | Na | 514 |

Die Verbindungen der allgemeinen Formeln (IV) und (V) können als freie Säuren oder als anorganische oder organische Salze dieser Säuren vorliegen. Vorzugsweise liegen sie in Form ihrer Alkali- oder Ammoniumsalze vor, wobei das Ammoniumkation substituiert sein kann. Beispiele solcher substituierter Ammoniumkationen sind 2-Hydroxyethylammonium, Bis-(2-hydroxyethyl)-ammonium, Tris-(2-hydroxyethyl)-ammonium, Bis-(2-hydroxyethyl)-methyl-ammonium, Tris-[2-(2-methoxyethoxy)-ethyl]-ammonium, 8-Hydroxy-3,6-dioxaoctylammonium und Tetraalkylammonium wie beispielsweise Tetramethylammonium oder Tetrabutylammonium.

Weiter betrifft die Erfindung nicht nur reine Monoazofarbstoffe der allgemeinen Formeln (IV) und (V), sondern auch Gemische dieser Verbindungen.

Die Erfindung betrifft weiterhin ein Verfahren zur Herstellung der erfindungsgemässen Monoazofarbstoffe der Formeln (IV) und (V), das dadurch gekennzeichnet ist, dass
ein Amin der allgemeinen Formel (VI) 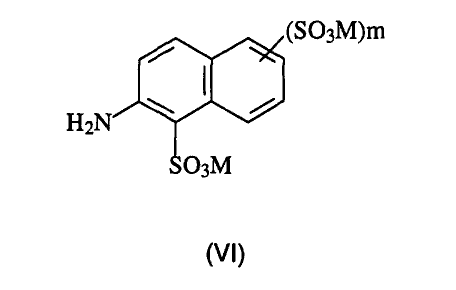 oder (VII) 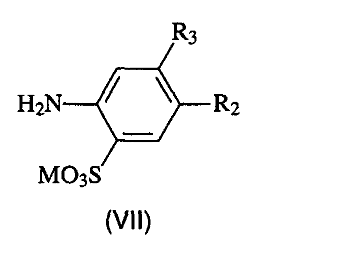 worin R₂, R₃, m und M die gleiche Bedeutung wie vorher angegeben haben, diazotiert und anschliessend mit einer Verbindung der Formel (VIII), 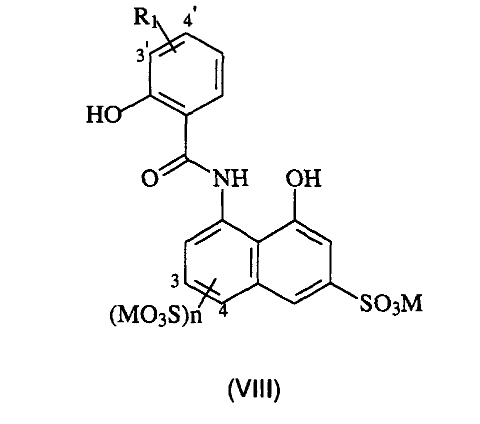 worin M, R₁ und n die gleiche Bedeutung wie vorher angegeben haben, unter Bedingungen gekuppelt wird, dass die erfindungsgemässen Farbstoffe der allgemeinen Formeln (IV) und (V) gebildet werden.

Die erfindungsgemässen Farbstoffe der allgemeinen Formeln (IV) und (V) färben cellulosehaltige Materialien, Papier, Baumwolle und Viskose sowie Leder und Wolle mit guten Nass- und Lichtechtheiten.
Die Farbstoffe können nach allen in der Papier- und Textilindustrie für Substantivfarbstoffe gebräuchlichen Verfahren verwendet werden, insbesondere in der Massen- wie in der Oberflächenbehandlung von Papier für geleimte oder ungeleimte Sorten. Sie können auch in der Garn- und Stückfärberei von Baumwolle, Viskose und Leinen nach dem Ausziehverfahren oder im kontinuierlichen Verfahren angewandt werden.

Die Erfindung betrifft weiter flüssige Farbstoffpräparationen, die mindestens einen Farbstoff der allgemeinen Formeln (IV) oder (V) enthalten. Diese Anwendungsform ist insbesondere beim Färben von Papier bevorzugt. Die Herstellung von stabilen, flüssigen, vorzugsweise wässrigen, konzentrierten Färbepräparaten kann auf allgemein bekannte Weise erfolgen, vorteilhaft durch Lösen in geeigneten Lösungsmitteln. Von besonderem Vorteil ist die Herstellungsmöglichkeit solcher stabilen, wässrig-konzentrierten Präparationen im Zuge der Farbstoffsynthese selbst ohne Zwischenisolierung des Farbstoffs, beispielsweise nach einer Entsalzung der Reaktionslösung durch Diafiltration.

Farbstoffe oder Mischungen von Farbstoffen der allgemeinen Formeln (IV) und (V) sind ausgezeichnete Farbstoffe zur Herstellung von Tinten für den Tintenstrahldruck.
Die erfindungsgemässen Farbstoffe der Formeln (IV) oder (V) sind gut mit anderen Purpurfarbstoffen, insbesondere solchen, wie sie beispielsweise in den Patentanmeldungen WO 96/24'636, EP 0'918'074 und EP 1'006'157 und im Patent US 5'074'914 beschrieben worden sind, kombinierbar.

Eine solche Tinte enthält eine oder mehrere der erfindungsgemässen Verbindungen in einem flüssigen wässrigen Lösungsmittel. Die Tinte enthält 0.5 bis 20 Gewichtsprozent, vorzugsweise 0.5 bis 8 Gewichtsprozent dieser Verbindungen, bezogen auf das Gesamtgewicht der Tinte. Das flüssige Lösungsmittel besteht vorzugsweise aus Wasser oder aus einer Mischung von Wasser und mit Wasser mischbaren organischen Lösungsmitteln. Geeignete Lösungsmittel sind beispielsweise in den Patenten US 4'626'284, US 4'703'113 und US 4'963'189 und den Patentanmeldungen GB 2'289'473 und EP 0'425'150 und EP 0'597'672 beschrieben worden.

Die vorliegende Erfindung wird durch die folgenden Beispiele näher beschrieben, ohne dass dadurch die beanspruchten Verbindungen in irgendeiner Weise eingeschränkt werden.

### Beispiele

### Beispiel 1

Die Verbindung Nr. 10 aus Tabelle 1 wurde folgendermassen hergestellt:

### Farbstoff-Kupplungskomponente:

Die Verbindung der Formel (IX), 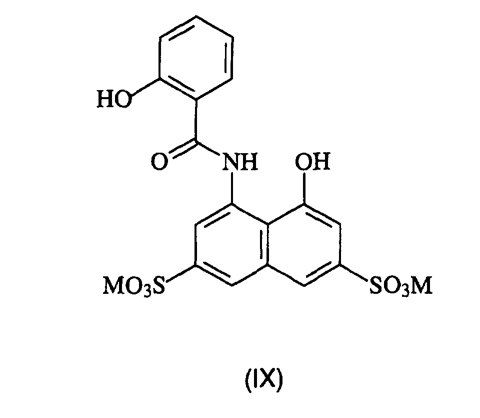 worin M für Na steht, wurde folgendermassen hergestellt:
160.6 g (0.4 Mol) des Mononatriumsalzes der 4-Amino-5-hydroxynaphthalin-2,7-disulfonsäure (Gehalt 85 %, erhältlich bei MERCK Schuchardt, Darmstadt, Deutschland) wurden in 320 ml Wasser durch Zugabe von 80 ml Natronlauge (30 %) bei einer Temperatur von 50°C gelöst. Nach Zugabe von 21.2 g Natriumcarbonat und 128.5 g (0.6 Mol) des Natriumsalzes der Phenylsalicylsäure (erhältlich bei Acros Organics, Geel, Belgien) wurde der Ansatz 36 Stunden bei einer Temperatur von 75°C gerührt. Anschliessend wurden dem Gemisch 100 ml Wasser zugesetzt, der pH-Wert der Reaktionslösung mit Essigsäure auf 7.0 eingestellt und das erhaltene Gemisch auf Raumtemperatur abgekühlt. Das ausgefallene Produkt wurde abgenutscht und durch Waschen mit Wasser gereinigt. Man erhielt so 103 g des Produkts der Formel (IX).

Die Verbindung kann auch folgendermassen hergestellt werden:

### Lösung des Säurechlorids:

Zu einer Lösung von 70.3 g (0.39 Mol) Acetylsalicylsäure (erhältlich bei Acros Organics, Geel, Belgien), 200 ml Ethylacetat und 10 ml Dimethylformarid wurden bei einer Temperatur von 50°C innerhalb 30 Minuten 34.1 ml Thionylchlorid zugetropft. Anschliessend wurde der Ansatz weitere 2 Stunden bei einer Temperatur von 50° C gerührt und der Überschuss an Thionylchlorid und ein Teil des Ethylacetats abdestilliert.

### Farbstoff-Kupplungskomponente:

120.5 g (0.3 Mol) des Mononatriumsalzes der 4-Amino-5-hydroxynaphthalin-2,7-disulfonsäure (85 %) wurden in 500 ml Wasser durch Zugabe von Natronlauge (30 %) bei Raumtemperatur gelöst. Zu dieser Lösung wurde bei einer Temperatur von 25° C unter Rühren während 1 Stunde die obige Lösung des Säurechlorids zugegeben und der pH-Wert durch gleichzeitiges Zudosieren von Natronlauge (30 %) zwischen 6.0 und 7.0 gehalten. Nach beendeter Zugabe wurde 2 Stunden bei Raumtemperatur nachgerührt und anschliessend das Ethylacetat abdestilliert. Darauf wurde das Gemisch auf eine Temperatur von 70° C erwärmt, der pH-Wert mit Natronlauge (30 %) auf 11.5 eingestellt und 1 Stunde unter diesen Bedingungen weitergerührt. Bei Absenken des pH-Wertes auf 7.0 mit Essigsäure bei Raumtemperatur wurden so als Niederschlag 120 g der Verbindung der Formel (IX) erhalten.

### Suspension A:

30.3 g (0.1 Mol) 2-Naphthylamin-1,5-disulfonsäure (erhältlich bei Acros Organics, Geel, Belgien) wurden in 400 ml Wasser suspendiert und der pH-Wert durch Zugabe von Natronlauge (30 %) auf 8.0 eingestellt. Die resultierende Lösung wurde auf eine Temperatur von 0° C bis 5° C abgekühlt und es wurden 25 ml einer wässrigen Natriumnitritlösung (4N) zugegeben. Bei einer Temperatur von 0° C bis 10° C wurde unter Rühren während 10 Minuten 25 ml wässrige Salzsäurelösung (37 %) zugegeben. Anschliessend wurde 1 Stunde bei dieser Temperatur weitergerührt. Die im Überschuss vorhandene salpetrige Säure wurde anschliessend durch Reaktion mit Sulfaminsäure entfernt.

### Herstellung des Farbstoffs 10

Bei einer Innentemperatur von 5° C bis 10° C wurde zur Suspension von 48.1 g Kupplungskomponente der Formel (IX) in 300 ml Wasser unter Rühren während 30 Minuten die obige Suspension A zugegeben und der pH-Wert durch gleichzeitiges Zudosieren von Natronlauge (20 %) zwischen 6.0 und 8.0 gehalten. Nach beendeter Zugabe wurde 2 Stunden bei einer Temperatur zwischen 5° C und 20° C und anschliessend 18 Stunden bei Raumtemperatur weitergerührt. Der Farbstoff wurde durch Zugabe von Natriumchlorid ausgesalzen, der Niederschlag abfiltriert und durch zweimaliges Umfällen aus Wasser / Ethanol gereinigt. Man erhielt so 55 g des Farbstoffs Nr. 10.

### Beispiel 2

Die Verbindung Nr. 11 aus Tabelle 1 wurde folgendermassen hergestellt:

### Farbstoff-Kupplungskomponente:

Die Verbindung der Formel (X), 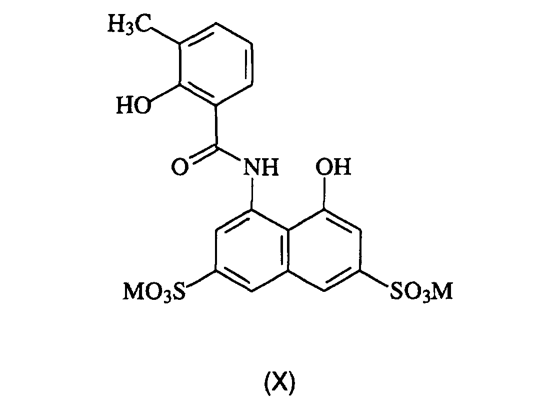 worin M für Na steht, wurde folgendermassen hergestellt:

### Suspension des Säurechlorids:

Zu einer Lösung von 38.4 g (0.25 Mol) 3-Methylsalicylsäure (Gehalt 99 %, erhältlich bei Acros Organics, Geel, Belgien), 170 ml Ethylacetat und 5 ml Dimethylformamid wurden bei einer Temperatur von 50°C innerhalb 30 Minuten 36.3 ml Thionylchlorid zugetropft. Anschliessend wurde der Ansatz weitere 2 Stunden bei einer Temperatur von 50° C gerührt und der Überschuss an Thionylchlorid und ein Teil des Ethylacetats abdestilliert.

### Farbstoff-Kupplungskomponente:

60.2 g (0.15 Mol) des Mononatriumsalzes der 4-Amino-5-hydroxynaphthalin-2,7-disulfonsäure (85 %) wurden in 500 ml Wasser durch Zugabe von Natronlauge (30 %) bei Raumtemperatur gelöst. Zu dieser Lösung wurde bei einer Innentemperatur zwischen 10° C und 15° C unter Rühren während 1 Stunde die obige Suspension des Säurechlorids zugegeben und der pH-Wert durch gleichzeitiges Zudosieren von Natronlauge (20 %) zwischen 7.0 und 7.5 gehalten. Nach beendeter Zugabe wurde 2 Stunden bei Raumtemperatur nachgerührt. Darauf wurde das Gemisch auf eine Temperatur von 60° C erwärmt, der pH-Wert mit Natronlauge (30 %) auf 11.5 eingestellt und 1 Stunde unter diesen Bedingungen weitergerührt. Bei Absenken des pH-Wertes auf 7.0 mit Essigsäure bei Raumtemperatur wurden so als Niederschlag 35 g der Verbindung der Formel (X) erhalten.

### Herstellung des Farbstoffs 11

Bei einer Innentemperatur von 5° C bis 10° C wurde zur Suspension von 48.1 g Kupplungskomponente der Formel (X) in 300 ml Wasser unter Rühren während 30 Minuten die Suspension A aus Beispiel 1 zugegeben und der pH-Wert durch gleichzeitiges Zudosieren von Natronlauge (20 %) zwischen 6.0 und 8.0 gehalten. Nach beendeter Zugabe wurde 2 Stunden bei einer Temperatur zwischen 5° C und 20° C und anschliessend 18 Stunden bei Raumtemperatur weitergerührt. Der Farbstoff wurde durch Zugabe von Natriumchlorid ausgesalzen, der Niederschlag abfiltriert und durch zweimaliges Umfällen aus Wasser / Ethanol gereinigt. Man erhielt so 52 g des Farbstoffs Nr. 11.

Auf ähnliche Art und Weise können durch die Wahl geeigneter Ausgangsmaterialien die erfindungsgemässen Monoazofarbstoffe 12 bis 23 hergestellt werden.

### Herstellungsbeispiel für Tinten

Die vorliegende Erfindung wird, soweit sie sich auf Tinten bezieht, durch die folgenden Beispiele beschrieben, in denen erfindungsgemässe Farbstoffe aus den Tabellen 1 und 2 und Farbstoffe des bisherigen Standes der Technik eingesetzt werden. 100 g jeder Tinte wurden hergestellt, indem die benötigte Menge Farbstoff (2 - 5 g), Glycerin (5 g), Ethylenglykol (5 g), Tergitol 15-S-7, erhältlich bei Union Carbide Co., Houston, USA) (0.5 g) und eine Biocid-Lösung (Mergal K 10N, erhältlich bei Riedel-de-Haën, Seelze, Deutschland) (0.2 g) zusammen mit Wasser etwa 1 Stunde unter Rühren auf eine Temperatur von 50° C erwärmt wurden. Die erhaltene Lösung wurde auf eine Temperatur von 20° C abgekühlt und ihr pH-Wert auf 7.5 eingestellt. Anschliessend wurde die Lösung durch ein Millipore®-Filter mit 0.5 µm Porendurchmesser abfiltriert. Die Farbstoffmenge wurde so gewählt, dass die optische Dichte des bedruckten Bildes für alle Farbstoffe möglichst gleich war.

### Anwendungsbeispiele von Tinten

Die Tinten wurden anschliessend mit Hilfe eines Tintenstrahldruckers des Typs BJC 8500 von Canon auf das Aufzeichnungsmaterial ILFORD Photo Paper DTPGP9 (erhältlich bei ILFORD Imaging Switzerland GmbH, Freiburg, Schweiz) aufgebracht, wobei quadratische Farbfelder mit einer Fläche von 1 cm² gedruckt wurden, die ein fein abgestuftes Liniengitter aufweisen, bei dem die Quadrate eine Länge von 8 Pixeln und die Linien eine Breite von 2 Pixeln aufweisen. Die bedruckten Muster wurden 24 Stunden bei einer relativen Luftfeuchtigkeit von 59 % getrocknet. Anschliessend wurde die Farbstoffdiffusion an den bedruckten Mustern bestimmt.

### Farbstoffdiffusion

Die optische Dichte der quadratischen Farbfelder wurde mit einem Densitometer Spectrolino™ der Firma Gretag Macbeth, Regensdorf, Schweiz) gemessen. Anschliessend wurden die bedruckten Muster während 7 Tagen in einem Klimaschrank der Marke Heräus bei einer Temperatur von 40° C und einer relativen Feuchtigkeit von 80 % gelagert. Nach abgeschlossener Lagerung wurden die Muster erneut ausgemessen. Die Dichteunterschiede in Prozenten vor und nach der Lagerung sind ein Mass für das Ausmass der Farbstoffdiffusion.

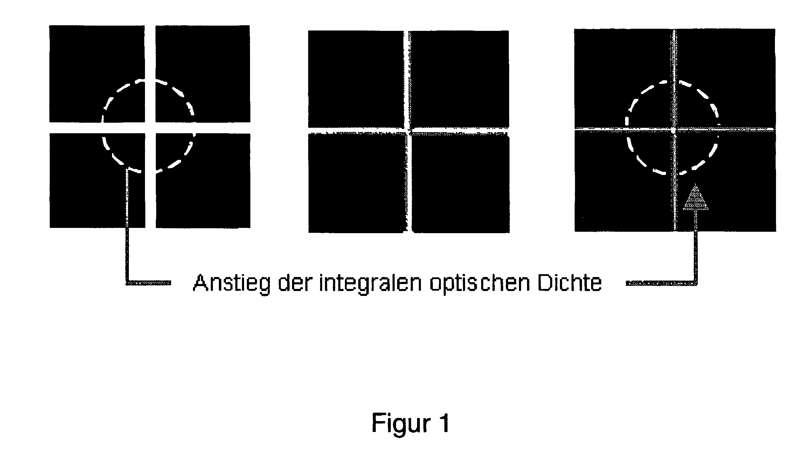

Ein Beispiel für fortschreitende Farbstoffdiffusion ist in Figur 1 aufgeführt.

Abhängig von der Stärke der Diffusion resultiert eine mehr oder weniger kräftige Einfärbung des ursprünglichen weissen Gitters, was zu einem Anstieg der integralen Dichte der quadratischen Testfläche führt.

### Ergebnisse

Die solchermassen bestimmten Werte für die Farbstoffdiffusion sind in Tabelle 3 aufgeführt.

**Tabelle 3**

| Farbstoff Nr. | Optische Dichte vor der Lagerung | Optische Dichte nach der Lagerung | Prozentualer Dichteunterschied |
|---|---|---|---|
| 10 | 0.73 | 0.77 | 5.5 |
| 13 | 0.75 | 0.76 | 1.3 |
| II (US 5'254'160) | 0.73 | 0.83 | 13.7 |
| III (JP 03-203'970) | 0.71 | 0.92 | 29.6 |

Ein Vergleich der gemessenen Dichteabweichungen in Tabelle 3 von bedruckten Mustern, die ein Mass für die Farbstoffdiffusion sind, zeigt klar, dass die Tinten mit den erfindungsgemässen Monoazofarbstoffen 10 und 13 eine wesentlich kleinere Farbstoffdiffusion zeigen als Tinten, die die bekannten Monoazofarbstoffe (II) und (III) enthalten. In der Praxis bedeutet dieses Ergebnis, dass mit den erfindungsgemässen Monoazofarbstoffen im Tintenstrahldruck hergestellte Bilder auch bei ungünstigen Lagerungsbedingungen nur einen sehr geringen Schärfeverlust zeigen.

## Patentansprüche

1. Monoazofarbstoffe der allgemeinen Formeln (IV) 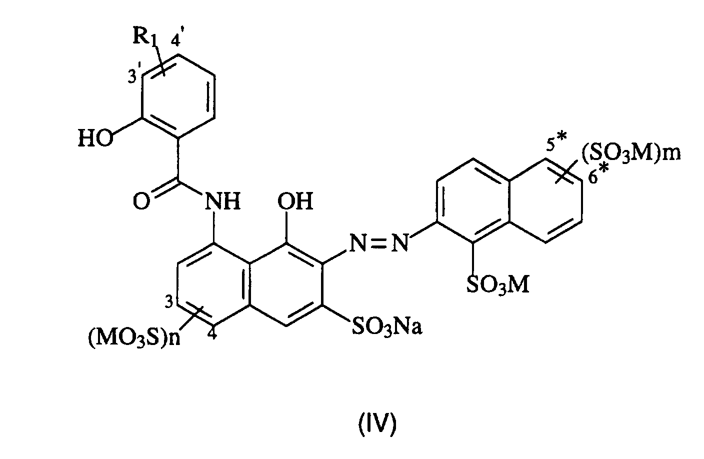 und (V) 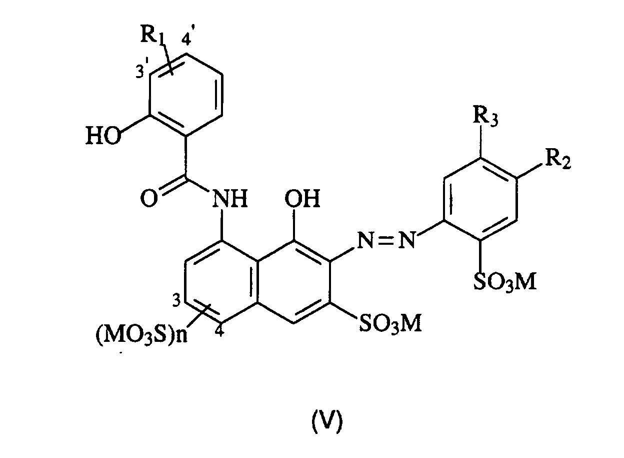 worin
R₁ für Wasserstoff, Alkyl mit 1 bis 6 Kohlenstoffatomen, Nitro, Fluor, Chlor oder Brom steht;
R₂, R₃ unabhängig voneinander für Wasserstoff, Alkyl oder Alkoxy mit je 1 bis 6 Kohlenstoffatomen, für substituiertes Amid mit bis zu 6 Kohlenstoffatomen, wobei die Substituenten aus der Gruppe bestehend aus Carboxy, Hydroxy, Carboxymethyl und Carboxyethyl ausgewählt werden; Fluor, Chlor oder Brom stehen;
m den Wert 0, 1 oder 2 annimmt;
n den Wert 0 oder 1 annimmt;
und
M für Wasserstoff, ein Metallkation oder ein Ammoniumkation, das gegebenenfalls einen oder mehrere Alkylreste oder substituierte Alkylreste mit jeweils 1 bis 18 C-Atomen aufweist, steht.

2. Monoazofarbstoffe nach Anspruch 1, **dadurch gekennzeichnet, dass**
R₁, R₂, R₃, m und n die gleiche Bedeutung wie in Anspruch 1 haben
und
M für das Kation eines Alkali- oder Erdalkalimetalls steht.

3. Monoazofarbstoffe nach Anspruch 1, **dadurch gekennzeichnet, dass**
M und n die gleiche Bedeutung wie in Anspruch 1 haben;
R₁ für Wasserstoff, Alkyl mit 1 oder 2 Kohlenstoffatomen, Chlor oder Brom steht;
R₂, R₃ unabhängig voneinander für Wasserstoff, Alkyl oder Alkoxy mit je 1 oder 2 Kohlenstoffatomen, für substituiertes Amid mit bis zu 6 Kohlenstoffatomen, wobei die Substituenten aus der Gruppe bestehend aus Carboxy, Carboxymethyl und Carboxyethyl ausgewählt werden; Chlor oder Brom stehen;
und
m den Wert 0 oder 1 annimmt.

4. Verfahren zur Herstellung der Monoazofarbstoffe nach Anspruch 1, **dadurch gekennzeichnet, dass**
ein Amin der allgemeinen Formel (VI) 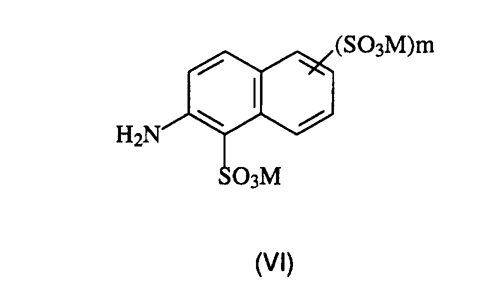 oder (VII) 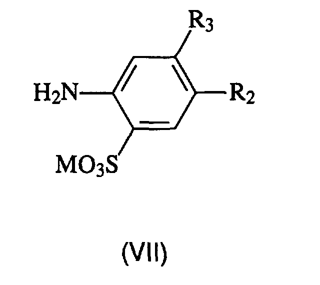 worin R₂, R₃, m und M die gleiche Bedeutung wie in Anspruch 1 haben, diazotiert und anschliessend mit einer Verbindung der Formel (VIII), 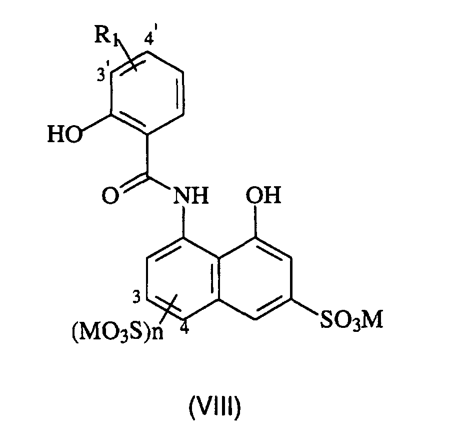 worin M, R₁ und n die gleiche Bedeutung wie in Anspruch 1 haben, unter Bedingungen gekuppelt wird, dass die erfindungsgemässen Farbstoffe der allgemeinen Formeln (IV) und (V) gebildet werden.

5. Verwendung der Monoazofarbstoffe nach einem oder mehreren der Ansprüche 1 bis 3 zum Färben von cellulosehaltigen Materialien, Papier, Baumwolle, Viskose, Leder und Wolle.

6. Flüssige Farbstoffpräparationen, die mindestens einen Farbstoff oder eine Mischung von Farbstoffen nach einem oder mehreren der Ansprüche 1 bis 3 enthalten.

7. Tinten für den Tintenstrahldruck, die mindestens einen Farbstoff oder eine Mischung von Farbstoffen nach einem oder mehreren der Ansprüche 1 bis 3 enthalten.

8. Tinten für den Tintenstrahldruck, die neben mindestens einem Farbstoff oder einer Mischung von Farbstoffen nach einem oder mehreren der Ansprüche 1 bis 3 einen oder mehrere weitere Farbstoffe enthalten.

## Claims

1. Monoazo dyes of general formulas (IV) 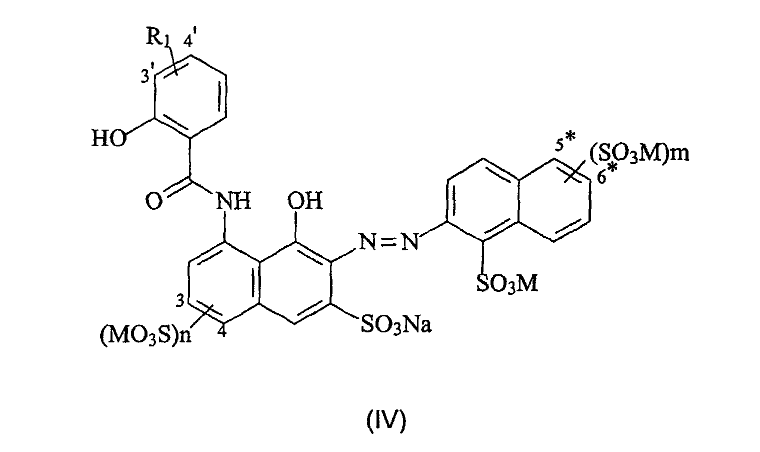 and (V) 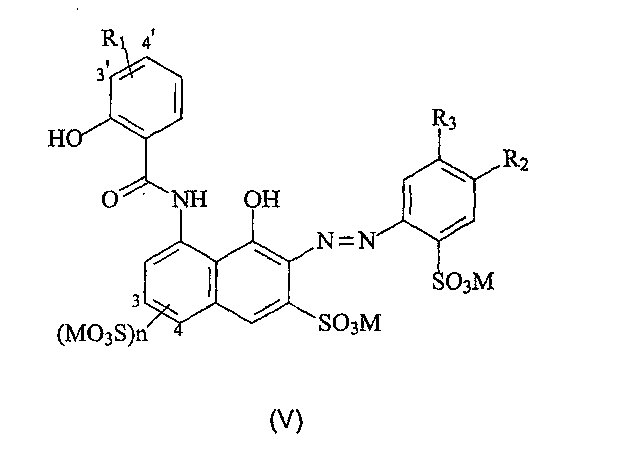 wherein
R₁ represents hydrogen, alkyl having from 1 to 6 C atoms, nitro, fluoro, chloro or bromo;
R₂, R₃ independently represent hydrogen, alkyl or alkoxy each having from 1 to 6 C atoms, substituted amide having up to 6 C atoms, where the substituents are selected from the group consisting of carboxy, hydroxy, carboxymethyl and carboxyethyl; fluoro, chloro or bromo;
m is 0, 1 or 2;
n is 0 or 1
and
M represents hydrogen, a metal cation or an ammonium cation, which may be substituted by one or more alkyl or substituted alkyl groups each having from 1 to 18 C atoms.

2. Monoazo dyes according to claim 1, wherein
R₁, R₂, R₃, m and n are as defined in claim 1
and
M represents the cation of an alkali or an earth alkali metal.

3. Monoazo dyes according to claim 1, wherein
M and n are as defined in claim 1;
R₁ represents hydrogen, alkyl having 1 or 2 C atoms, chloro or bromo;
R₂, R₃ independently represent hydrogen, alkyl or alkoxy each having 1 or 2 C atoms, substituted amide having up to 6 C atoms, where the substituents are selected from the group consisting of carboxy, carboxymethyl and carboxyethyl; chloro or bromo
and
m is 0 or 1.

4. Process for the preparation of monoazo dyes according to claim 1,
wherein
an amine of general formula (VI) 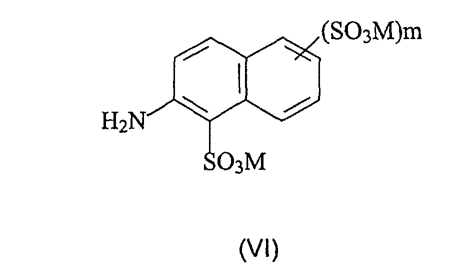 or (VII) 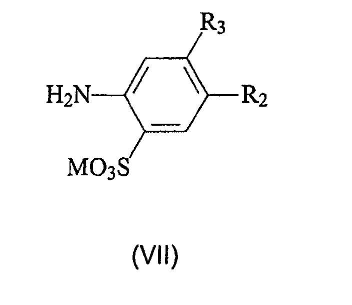 wherein R₂, R₃, m and M are as defined in claim 1,
is diazotized and coupled afterwards with a compound of formula (VIII), 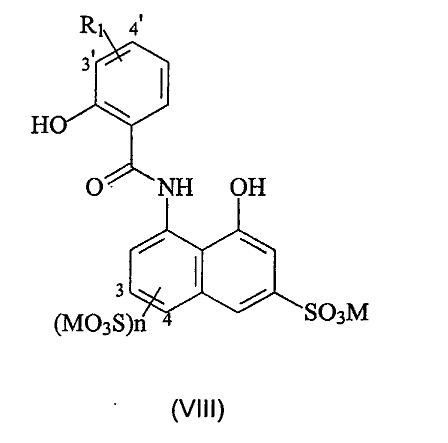 wherein M, R₁ and n are as defined in claim 1,
under conditions that the dyes of general formulas (IV) and (V) according to the invention are formed.

5. Process for dyeing cellulose containing materials, paper, cotton, viscose, leather and wool by applying thereto a monoazo dye according to claims 1 to 3.

6. Liquid dye preparations comprising at least one monoazo dye or a mixture of monoazo dyes according to claims 1 to 3.

7. Inks for ink jet printing, comprising at least one monoazo dye or a mixture of monoazo dyes according to claims 1 to 3.

8. Inks for ink jet printing, comprising in addition to at least one monoazo dye or a mixture of monoazo dyes according to claims 1 to 3 one or more other dyes.

## Revendications

1. Colorants monoazoïques de formules générales (IV) 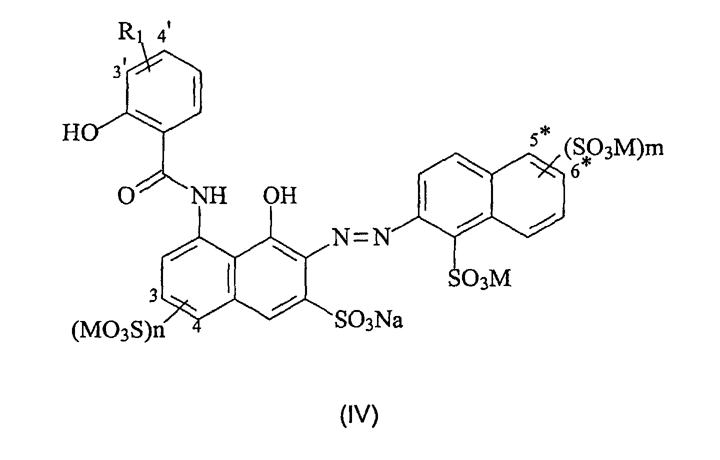 et (V) 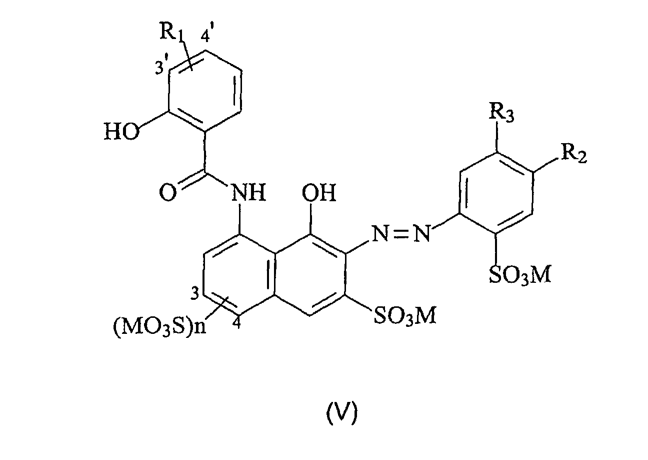 dans lesquelles
R₁ représente un atome d'hydrogène, un radical alkyle ayant de 1 à 6 atomes de carbone, un radical nitro, un atome de fluor, un atome de chlore ou un atome de brome;
R₂, R₃ représentent indépendamment un atome d'hydrogène, un radical alkyle ou alcoxy ayant chacun de 1 à 6 atomes de carbone, un radical amide substitué ayant jusqu'à 6 atomes de carbone, dans lequel les substituants sont choisis parmi le groupe constitué du radical carboxyle, du radical hydroxyle, du radical carboxyméthyle et du radical carboxyéthyle; un atome de fluor, un atome de chlore ou un atome de brome;
m vaut 0, 1 ou 2;
n vaut 0 ou 1;
et
M représente un atome d'hydrogène, un cation métallique ou un cation ammonium optionnellement substitués par un plusieurs radicaux alkyle ou alkyle substitué ayant chacun de 1 à 18 atomes de carbone.

2. Colorants monoazoïques selon la revendication 1, dans lesquelles
R₁, R₂, R₃, m et n sont définis comme à la revendication 1
et
M représente le cation d'un métal alcalin ou alcalino-terreux.

3. Colorants monoazoïques selon la revendication 1, dans lesquelles
M et n sont définis comme à la revendication 1;
R₁ représente un atome d'hydrogène, un radical alkyle ayant 1 ou 2 atomes de carbone, un atome de chlore ou un atome de brome;
R₂, R₃ représentent indépendamment un atome d'hydrogène, un radical alkyle ou alcoxy ayant chacun 1 ou 2 atomes de carbone, un radical amide substitué ayant jusqu'à 6 atomes de carbone, dans lequel les substituants sont choisis parmi le groupe constitué du radical carboxyle, du radical hydroxyle, du radical carboxyméthyle et du radical carboxyéthyle; un atome de fluor, un atome de chlore ou un atome de brome
et
m vaut 0 ou 1.

4. Procédé de préparation des colorants monoazoïques selon la revendication 1, où
on diazote une amine de formule générale (VI) 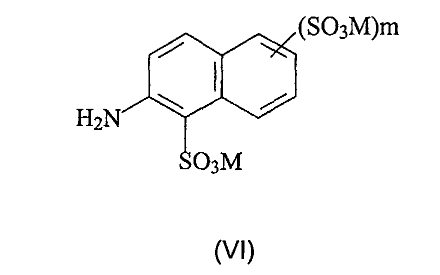 ou (VII) 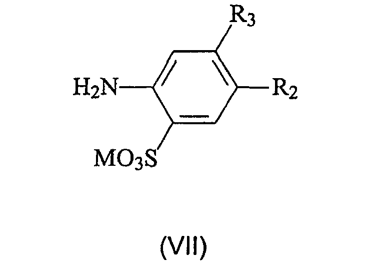 dans laquelle R₂, R₃, m et M sont définis comme à la revendication 1, et copule ensuite avec un composé de formule (VIII), 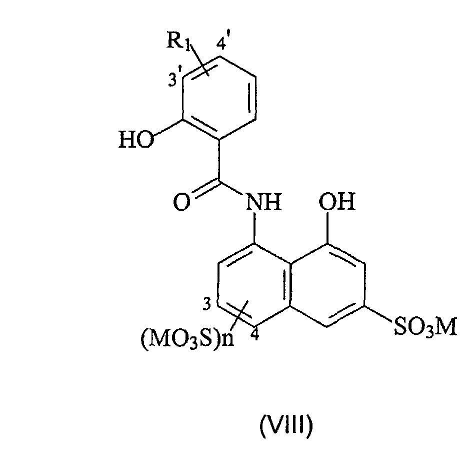 dans laquelle M, R₁ et n sont définis comme à la revendication 1,
dans des conditions telles que les colorants de formules générales (IV) et (V) selon l'invention soient formés.

5. Utilisation des colorants monoazoïques selon une ou plusieurs des revendications 1 à 3 pour la teinture des matériaux cellulosiques, du papier, du coton, de la viscose, du cuir et de la laine.

6. Préparations liquides contenant au moins un colorant monoazoïque ou un mélange de colorants monoazoïques selon une ou plusieurs des revendications 1 à 3.

7. Encres d'impression selon la méthode du jet d'encre qui comprennent au moins un colorant monoazoïque ou un mélange de colorants monoazoïques selon une ou plusieurs des revendications 1 à 3.

8. Encres d'impression selon la méthode du jet d'encre qui comprennent, à coté d'au moins un colorant monoazoïque ou un mélange de colorants monoazoïques selon une ou plusieurs des revendications 1 à 3 un ou plusieurs colorants supplémentaires.
